(19) Europäisches Patentamt
European Patent Office
Office européen des brevets

(11) **EP 3 455 950 B1**

(12) **EUROPEAN PATENT SPECIFICATION**

(45) Date of publication and mention of the grant of the patent:
**23.08.2023 Bulletin 2023/34**

(21) Application number: **17796917.7**

(22) Date of filing: **12.05.2017**

(51) International Patent Classification (IPC):
**H04B 7/04** *(2017.01)* **H04B 7/06** *(2006.01)*

(52) Cooperative Patent Classification (CPC):
**H04B 7/0469; H04B 7/0478; H04B 7/0482; H04B 7/0617; H04B 7/0626; H04B 7/063**

(86) International application number:
**PCT/US2017/032361**

(87) International publication number:
**WO 2017/197237 (16.11.2017 Gazette 2017/46)**

(54) **EVOLVED NODE-B (ENB), USER EQUIPMENT (UE) AND METHODS FOR ADAPTIVE BEAMFORMING AND CHANNEL STATE INFORMATION (CSI) REPORTING**

EVOLVED NODE-B (ENB), BENUTZERGERÄT (UE) UND VERFAHREN ZUR ADAPTIVEN STRAHLFORMUNG UND MELDUNG VON KANALZUSTANDSINFORMATIONEN (CSI)

NOEUD B ÉVOLUÉ (ENB), ÉQUIPEMENT D'UTILISATEUR (UE) ET PROCÉDÉS DE FORMATION DE FAISCEAU ADAPTATIVE ET DE SIGNALISATION D'INFORMATIONS D'ÉTAT DE CANAL (CSI)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2016 US 201662336400 P**
**16.09.2016 US 201662395933 P**

(43) Date of publication of application:
**20.03.2019 Bulletin 2019/12**

(73) Proprietor: **Apple Inc.**
**Cupertino, CA 95014 (US)**

(72) Inventors:
• **LEE, Wook Bong**
**San Jose, California 95130 (US)**
• **DA SILVA, Claudio**
**San Jose, California 95136 (US)**
• **DOOSTNEJAD, Roya**
**Los Altos, California 94024 (US)**
• **ORHAN, Oner**
**San Jose, California 95129 (US)**
• **DAVYDOV, Alexei**
**Nizhny Novgorod 603132 (RU)**
• **HAN, Seunghee**
**San Jose, California 95120 (US)**
• **TALWAR, Shilpa**
**Cupertino, California 95014 (US)**
• **SERGEEV, Victor**
**Nizhny Novgorod 607220 (RU)**
• **MOROZOV, Gregory**
**Nizhny Novgorod 603107 (RU)**

(74) Representative: **Wardle, Callum Tarn**
**Withers & Rogers LLP**
**2 London Bridge**
**London SE1 9RA (GB)**

(56) References cited:
**WO-A1-2015/020577 WO-A1-2015/133690
WO-A1-2015/133690 US-A1- 2013 322 376
US-A1- 2015 381 247 US-A1- 2015 381 247
US-B2- 8 750 205 US-B2- 9 083 495**

**Description**

TECHNICAL FIELD

Embodiments pertain to wireless communications. Some embodiments relate to wireless networks including 3GPP (Third Generation Partnership Project) networks. 3GPP LTE ® (Long Term Evolution) networks, and 3GPP LTE-A (LTE Advanced) networks, although the scope of the embodiments is not limited in this respect. Some embodiments relate to beamforming. Some embodiments relate to reporting of channel state information (CSI). The invention is defined in the appended claims.

BACKGROUND

**Base** stations and mobile devices operating in a cellular network may exchange data and related control messages. Beamforming techniques may be used to provide directional transmission from the base station to a mobile device, in some cases. Such directional transmission may provide performance benefits in comparison to non-directional transmission, in some cases. For instance, a reduction in interference to other mobile devices, an increase in system capacity and/or other benefit may be realized. In an example scenario, the mobile device may be in motion, and a directional transmission to the mobile device in a narrow direction may be challenging. Accordingly, there is a general need for methods and systems to enable directions transmission in these other scenarios.

WO 2015/133690 A1 discloses a method for transmitting feedback information to a base station at a user equipment in a wireless communication system. The method includes receiving a pilot signal from the base station at a first time and a second time, selecting a first precoding matrix index corresponding to the first time and a second precoding matrix index corresponding to the second time from a predetermined codebook based on the pilot signal, and transmitting the feedback information including information about a variation value between the first precoding matrix index and the second precoding matrix index to the base station.

US 2015381247 A1 discloses a method and an apparatus for reporting channel state information (CSI). The method by which a terminal of the wireless communication system reports the CSI comprises: a step of receiving a reference signal from a base station; and a step of reporting the CSI generated through the reference signal to the base station. The CSI can include information for indicating a first pre-coding matrix for a first domain of a two-dimensional antenna structure and a second pre-coding matrix for a second domain of the two-dimensional antenna structure. The first pre-coding matrix can be determined on the basis of a coefficient wherein an angle the first domain is determined according to an angle in the second domain.

BRIEF DESCRIPTION OF THE DRAWINGS

FIG. 1 is a functional diagram of a 3GPP network in accordance with some embodiments;
FIG. 2 illustrates a block diagram of an example machine in accordance with some embodiments;
FIG. 3 is a block diagram of an Evolved Node-B (eNB) in accordance with some embodiments;
FIG. 4 is a block diagram of a User Equipment (UE) in accordance with some embodiments;
FIG. 5 illustrates the operation of a method of communication in accordance with some embodiments;
FIG. 6 illustrates the operation of another method of communication in accordance with some embodiments;
FIG. 7 illustrates the operation of another method of communication in accordance with some embodiments;
FIG. 8 illustrates the operation of another method of communication in accordance with some embodiments;
FIG. 9 illustrates an example antenna array in accordance with some embodiments, and
FIG. 10 illustrates another example antenna array in accordance with some embodiments

DETAILED DESCRIPTION

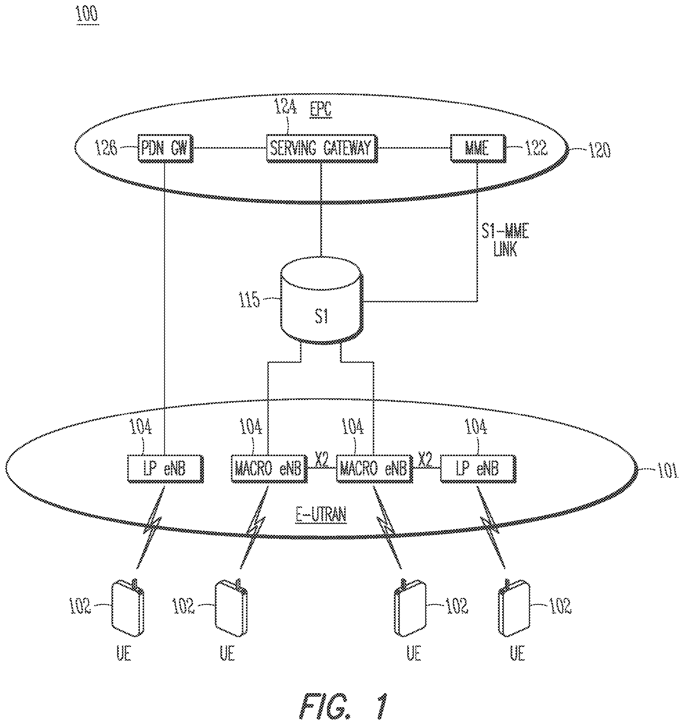

FIG. 1 is a functional diagram of a 3GPP network in accordance with some embodiments. It should be noted that embodiments are not limited, to the example 3GPP network shown in FIG. 1, as other networks may be used m some embodiments. As an example, a Fifth Generation (5G) network may be used in some cases. As another example, a New Radio (NR) network may be used in some cases. As another example, a wireless local area network (WLAN) may be used in some cases. Embodiments are not limited to these example networks, however, as other networks may be used in some embodiments. In some embodiments, a network may include one or more components shown in FIG. 1. Some embodiments may not necessarily include all components shown in FIG. 1. and some embodiments may include additional components not shown in FIG. 1.

The network 100 may comprise a radio access network (**RAN**) (e.g., as depicted, the E-UTRAN or evolved universal terrestrial radio access network) 101 and the core network 120 (e.g., shown as an evolved packet core (EPC)) coupled together through an S1 interface 115. For convenience and brevity sake, only a portion of the core network 120, as well as the RAN 101, is shown.

The core network 120 includes a mobility management entity (MME) 122, a serving gateway (serving GW) 124, and packet, data network gateway (PDN GW) 126. The RAN 101 includes Evolved Node-B's (eNBs) 104 (which may operate as base stations) for communicating with User Equipment (EE) 102. The eNBs 104 may include macro eNBs and low power (LP) eNBs.

In some embodiments, the eNB 104 may transmit signals (data, control and/or other) to the UE 102, and may receive signals (data, control and/or other) from the UE 102. These embodiments will be described in more detail below.

The MME 122 is similar in function to the control plane of legacy Serving GPRS Support Nodes (SGSN). The MME 122 manages mobility aspects in access such as gateway selection and tracking area list management. The serving GW 124 terminates the interface toward the RAN 101, and routes data packets between the RAN 101 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 101 including but not limited to RNC (radio network controller functions) such as radio bearer management, uplink and downlink dynamic radio resource management and data packet scheduling, and mobility management. In accordance with embodiments, UEs 102 may be configured to communicate Orthogonal Frequency Division Multiplexing (OFDM) communication signals with an eNB 104 over a multicarrier communication channel in accordance with an Orthogonal Frequency Division Multiple Access (OFDMA) communication technique. The OFDM signals may comprise a plurality of orthogonal subcarriers.

The S1 interface 115 is the interface that separates the RAN 101 and the EPC 120. It is split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a UE 102, while uplink transmission from the UE 102 to the eNB 104 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element (RE). There are several different physical downlink channels that are conveyed using such resource blocks. With particular relevance to this disclosure, two of these physical downlink channels are the physical downlink shared channel and the physical down link control channel.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

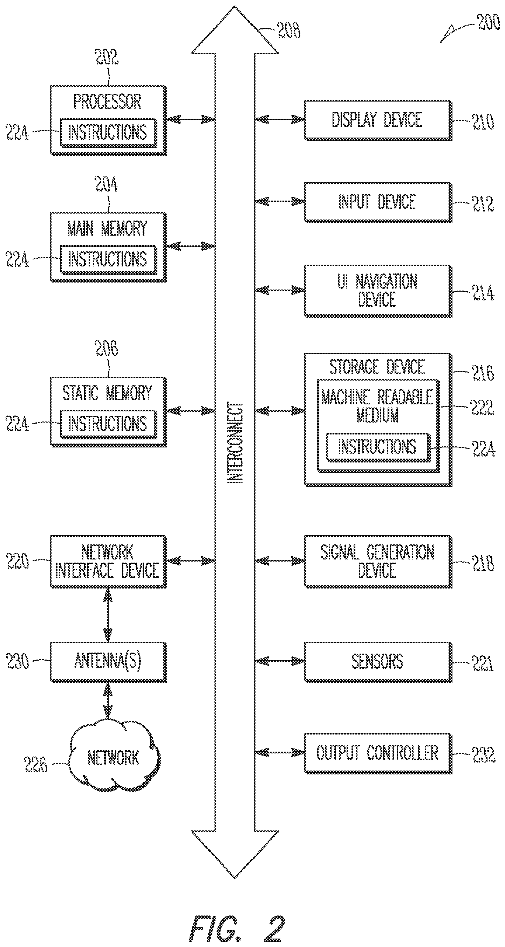

FIG. 2 illustrates a block diagram of an example machine in accordance with some embodiments. The machine 200 is an example machine upon which any one or more of the techniques and/or methodologies discussed herein may be performed. In alternative embodiments, the machine 200 may operate as a standalone device or may be connected (e.g., networked) to other machines. In a networked deployment, the machine 200 may operate in the capacity of a server machine, a client machine, or both in server-client network environments. In an example, the machine 200 may act as a peer machine in peer-to-peer (P2P) (or other distributed) network environment. The machine 200 may be a UE 102, eNB 104, access point (AP), station (STA), mobile device, base station, personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via an interlink (e.g., bus) 208. The machine 200 may further include a display unit 210, an alphanumeric input device 212 (e.g., a keyboard), and a user interface (UI) navigation device 214 (e.g., a mouse). In an example, the display unit 210, input device 212 and UI navigation device 214 may be a touch screen display. The machine 200 may additionally include a storage device (e.g., drive unit) 216, a signal generation device 218 (e.g., a speaker), a network interface device 220, and one or more sensors 221, such as a global positioning system (GPS) sensor, compass, accelerometer, or other sensor. The machine 200 may include an output controller 228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a machine readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the machine 200. In an example, one or any combination of the hardware processor 202, the main memory 204, the static memory 206, or the storage device 216 may constitute machine readable media. In some embodiments, the machine readable medium may be or may include a non-transitory computer-readable storage medium

While the machine readable medium 222 is illustrated as a single medium, the term "machine readable medium" may include a single medium or multiple media (e.g., a centralized or distributed database, and/or associated caches and servers) configured to store the one or more instructions 224. The term "machine readable medium" may include any medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 220 may include one or more physical jacks (e.g., Ethernet, coaxial, or phone jacks) or one or more antennas to connect to the communications network 226. In an example, the network interface device 220 may include a plurality of antennas to wirelessly communicate using at least one of single-input multiple-output (SIMO), multiple-input multiple-output (MIMO), or multiple-input single-output (MISO) techniques. In some examples, the network interface device 220 may wirelessly communicate using Multiple User MIMO techniques. The term "transmission medium" shall be taken to include any intangible medium that is capable of storing, encoding or carrying instructions for execution by the machine 200, and includes digital or analog communications signals or other intangible medium to facilitate communication of such software.

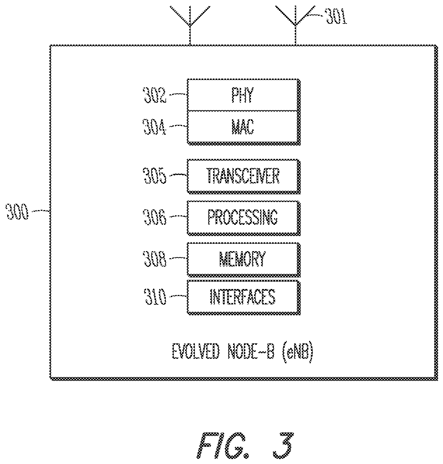

FIG. 3 is a block diagram of an Evolved Node-B (eNB) in accordance with some embodiments. It should be noted that in some embodiments, the eNB 300 may be a stationary non-mobile device. The eNB 300 may be suitable for use as an eNB 104 as depicted in FIG. 1. The eNB 300 may include physical layer circuitry 302 and a transceiver 305, one or both of which may enable transmission and reception of signals to and from the UE 200, other eNBs, other UEs or other devices using one or more antennas 301. As an example, the physical layer circuitry 302 may perform various encoding and decoding functions that may include formation of baseband signals for transmission and decoding of received signals. As another example, the transceiver 305 may perform various transmission and reception functions such as conversion of signals between a baseband range and a Radio Frequency (RF) range. Accordingly, the physical layer circuitry 302 and the transceiver 305 may be separate components or may be part of a combined component. In addition, some of the described functionality related to transmission and reception of signals may be performed by a combination that may include one, any or all of the physical layer circuitry 302, the transceiver 305, and other components or layers. The eNB 300 may also include medium access control layer (MAC) circuitry 304 for controlling access to the wireless medium. The eNB 300 may also include processing circuitry 306 and memory 308 arranged to perform the operations described herein. The eNB 300 may also include one or more interfaces 310, which may enable communication with other components, including other eNBs 104 (FIG. 1), components in the EPC 120 (FIG. 1) or other network components. In addition, the interfaces 310 may enable communication with other components that may not be shown in FIG. 1, including components external to the network. The interfaces 310 may be wired or wireless or a combination thereof. It should be noted that in some embodiments, an eNB or other base station may include some or all of the components shown in either FIG. 2 or FIG. 3 or both.

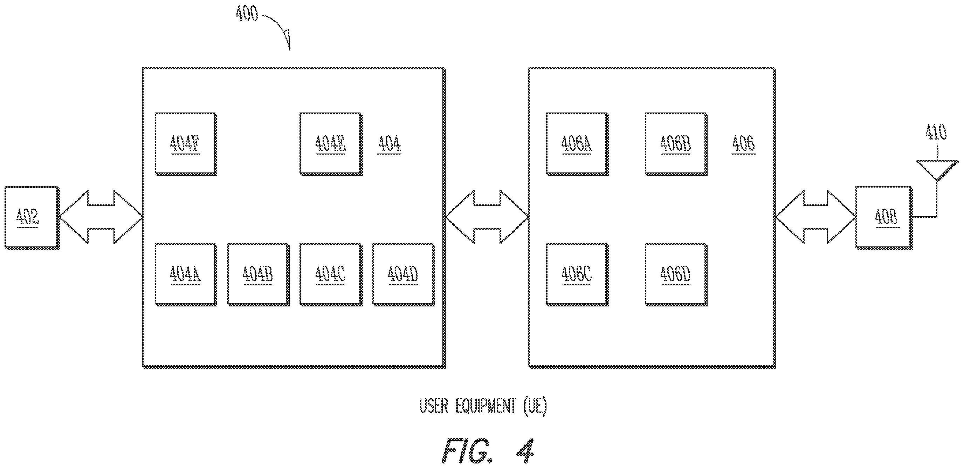

FIG. 4 is a block diagram of a User Equipment (UE) in accordance with some embodiments. The UE 400 may be suitable for use as a UE 102 as depicted in FIG. 1. In some embodiments, the UE 400 may include application circuitry 402, baseband circuitry 404, Radio Frequency (RF) circuitry 406, front-end module (FEM) circuitry 408 and one or more antennas 410, coupled together at least as shown. In some embodiments, other circuitry or arrangements may include one or more elements and/or components of the application circuitry 402, the baseband circuitry 404, the RF circuitry 406 and/or the FEM circuitry 408, and may also include other elements and/or components in some cases. As an example, "processing circuitry" may include one or more elements and/or components, some or all of which may be included in the application circuitry 402 and/or the baseband circuitry 404. As another example, a "transceiver" and/or "transceiver circuitry" may include one or more elements and/or components, some or all of which may be included in the RF circuitry 406 and/or the FEM circuitry 408. These examples are not limiting, however, as the processing circuitry, transceiver and/or the transceiver circuitry may also include other elements and/or components in some cases. It should be noted that in some embodiments, a UE or other mobile device may include some or all of the components shown in either FIG. 2 or FIG. 4 or both.

The application circuitry 402 may include one or more application processors. For example, the application circuitry 402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 404 may include circuitry such as, but not limited to, one or more single-core or multi-core processors. The baseband circuitry 404 may include one or more baseband processors and/or control logic to process baseband signals received from a receive signal path of the RF circuitry 406 and to generate baseband signals for a transmit signal path of the RF circuitry 406. Baseband processing circuitry 404 may interface with the application circuitry 402 for generation and processing of the baseband signals and for controlling operations of the RF circuitry 406. For example, in some embodiments, the baseband circuitry 404 may include a second generation (2G) baseband processor 404a, third generation (3G) baseband processor 404b, fourth generation (4G) baseband processor 404c, and/or other baseband processor(s) 404d for other existing generations, generations in development or to be developed in the future (e.g., fifth generation (5G), 6G, etc.). The baseband circuitry 404 (e.g., one or more of baseband processors 404a-d) may handle various radio control functions that enable communication with one or more radio networks via the RF circuitry 406. The radio control functions may include, but are not limited to, signal modulation/demodulation, encoding/decoding, radio frequency shifting, etc. In some embodiments, modulation/demodulation circuitry of the baseband circuitry 404 may include Fast-Fourier Transform (FFT), precoding, and/or constellation mapping/demapping functionality. In some embodiments, encoding/decoding circuitry of the baseband circuitry 404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 404 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 404e of the baseband circuitry 404 may be configured to run elements of the protocol stack for signaling of the PHY, MAC, RLC, PDCP and/or RRC layers. In some embodiments, the baseband circuitry may include one or more audio digital signal processor(s) (DSP) 404f. The audio DSP(s) 404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 404 and the application circuitry 402 may be implemented together such as, for example, on a system on a chip (SOC).

In some embodiments, the baseband circuitry 404 may provide for communication compatible with one or more radio technologies. For example, in some embodiments, the baseband circuitry 404 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 404 is configured to support radio communications of more than one wireless protocol may be referred to as multi-mode baseband circuitry.

RF circuitry 406 may enable communication with wireless networks using modulated electromagnetic radiation through a non-solid medium. In various embodiments, the RF circuitry 406 may include switches, filters, amplifiers, etc. to facilitate the communication with the wireless network. RF circuitry 406 may include a receive signal path which may include circuitry to down-convert RF signals received from the FEM circuitry 408 and provide baseband signals to the baseband circuitry 404. RF circuitry 406 may also include a transmit signal path which may include circuitry to up-convert baseband signals provided by the baseband circuitry 404 and provide RF output signals to the FEM circuitry 408 for transmission.

In some embodiments, the RF circuitry 406 may include a receive signal path and a transmit signal path. The receive signal path of the RF circuitry 406 may include mixer circuitry 4U6a, amplifier circuitry 406b and filter circuitry 406c. The transmit signal path of the RF circuitry 406 may include filter circuitry 406c and mixer circuitry 406a. RF circuitry 406 may also include synthesizer circuitry 406d for synthesizing a frequency for use by the mixer circuitry 406a of the receive signal path and the transmit signal path. In some embodiments, the mixer circuitry 406a of the receive signal path may be configured to down-convert RF signals received from the FEM circuitry 408 based on the synthesized frequency provided by synthesizer circuitry 406d. The amplifier circuitry 406b may be configured to amplify the down-converted signals and the filter circuitry 406c may be a low-pass filter (LPF) or band-pass filter (BPF) configured to remove unwanted signals from the down-converted signals to generate output baseband signals. Output baseband signals may be provided to the baseband circuitry 404 for further processing. In some embodiments, the output baseband signals may be zero-frequency baseband signals, although this is not a requirement. In some embodiments, mixer circuitry 406a of the receive signal path may comprise passive mixers, although the scope of the embodiments is not limited in this respect. In some embodiments, the mixer circuitry 406a of the transmit signal path may be configured to up-convert input baseband signals based on the synthesized frequency provided by the synthesizer circuitry 406d to generate RF output signals for the FEM circuitry 408. The baseband signals may be provided by the baseband circuitry 404 and may be filtered by filter circuitry 406c. The filter circuitry 406c may include a low-pass filter (LPF), although the scope of the embodiments is not limited in this respect.

In some embodiments, the mixer circuitry 406a of the receive signal path and the mixer circuitry 406a of the transmit signal path may include two or more mixers and may be arranged for quadrature down-conversion and/or up-conversion respectively. In some embodiments, the mixer circuitry 406a of the receive signal path and the mixer circuitry 406a of the transmit signal path may include two or more mixers and may be arranged for image rejection (e.g., Hartley image rejection). In some embodiments, the mixer circuitry 406a of the receive signal path and the mixer circuitry 406a may be arranged for direct down-conversion and/or direct up-conversion, respectively. In some embodiments, the mixer circuitry 406a of the receive signal path and the mixer circuitry 406a of the transmit signal path may be configured for superheterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 406 may include analog-to-digital converter (ADC) and digital-to-analog converter (DAC) circuitry and the baseband circuitry 404 may include a digital baseband interface to communicate with the RF circuitry 406. In some dual-mode embodiments, a separate radio IC circuitry may be provided for processing signals for each spectrum, although the scope of the embodiments is not limited in this respect.

In some embodiments, the synthesizer circuitry 406d may be a fractional-N synthesizer or a fractional N/N+1 synthesizer, although the scope of the embodiments is not limited in this respect as other types of frequency synthesizers may be suitable. For example, synthesizer circuitry 406d may be a delta-sigma synthesizer, a frequency multiplier, or a synthesizer comprising a phase-locked loop with a frequency divider. The synthesizer circuitry 406d may be configured to synthesize an output frequency for use by the mixer circuitry 406a of the RF circuitry 406 based on a frequency input and a divider control input. In some embodiments, the synthesizer circuitry 406d may be a fractional N/N+1 synthesizer. In some embodiments, frequency input may be provided by a voltage controlled oscillator (VCO), although that is not a requirement. Divider control input may be provided by either the baseband circuitry 404 or the applications processor 402 depending on the desired output frequency. In some embodiments, a divider control input (e.g., N) may be determined from a look-up table based on a channel indicated by the applications processor 402.

Synthesizer circuitry 406d of the RF circuitry 406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency ($f_{LO}$). In some embodiments, the RF circuitry 406 may include an IQ/polar converter.

FEM circuitry 408 may include a receive signal path which may include circuitry configured to operate on RF signals received from one or more antennas 410, amplify the received signals and provide the amplified versions of the received signals to the RF circuitry 406 for further processing. FEM circuitry 408 may also include a transmit signal path which may include circuitry configured to amplify signals for transmission provided by the RF circuitry 406 for transmission by one or more of the one or more antennas 410.

In some embodiments, the FEM circuitry 408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 406). The transmit signal path of the FEM circuitry 408 may include a power amplifier (PA) to amplify input RF signals (e.g., provided by RF circuitry 406), and one or more filters to generate RF signals for subsequent transmission (e.g., by one or more of the one or more antennas 410. In some embodiments, the UE 400 may include additional elements such as, for example, memory/storage, display, camera, sensor, and/or input/output (I/O) interface.

The antennas 230, 301, 410 may comprise one or more directional or omnidirectional antennas, including, for example, dipole antennas, monopole antennas, patch antennas, loop antennas, micro-strip antennas or other types of antennas suitable for transmission of RF signals. In some multiple-input multiple-output (MIMO) embodiments, the antennas 230, 301, 410 may be effectively separated to take advantage of spatial diversity and the different channel characteristics that may result.

In some embodiments, the UE 400 and/or the eNB 300 and/or the machine 200 may be a mobile device and may be a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive and/or transmit information wirelessly. In some embodiments, the UE 400 and/or eNB 300 and/or the machine 200 may be configured to operate in accordance with 3GPP standards, although the scope of the embodiments is not limited in this respect. Mobile devices or other devices in some embodiments may be configured to operate according to other protocols or standards, including IEEE 802.11 or other IEEE standards. In some embodiments, the UE 400 and/or the eNB 300 and/or the machine 200 and/or other device may include one or more of a keyboard, a display, a non-volatile memory port, multiple antennas, a graphics processor, an application processor, speakers, and other mobile device elements. The display may be an LCD screen including a touch screen.

Although the UE 400, the eNB 300, and the machine 200 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 400 and/or eNB 300 and/or machine 200 may include various components of the UE 400 and/or the eNB 300 and/or the machine 200 as shown in FIGs. 2-4. Accordingly, techniques and operations described herein that refer to the UE 400 (or 102) may be applicable to an apparatus for a UE. In addition, techniques and operations described herein that refer to the eNB 300 (or 104) may be applicable to an apparatus for an eNB.

In accordance with some embodiments, the eNB 104 may generate a plurality of adaptive codebooks based on a base codebook, each adaptive codebook generated for a different beam-width for directional transmissions by an antenna array, the adaptive codebooks generated based at least partly on matrix products of: a first matrix based at least partly on a sequence of complex exponentials, wherein an argument of the sequence of complex exponentials is based at least partly on a product that includes a configurable broadening factor and a sequence of antenna element indexes of the antenna array; and a second matrix that includes codewords of the base codebook. A predetermined plurality of broadening factor values may be used in the first matrix to produce the different beam-widths for the adaptive codebooks. The eNB 104 may decode a message from the UE 102 that indicates a mobile velocity measurement of the UE 102. The eNB 104 may select one of the adaptive codebooks to be used for the directional transmissions based at least partly on the mobile velocity measurement. These embodiments are described in more detail below.

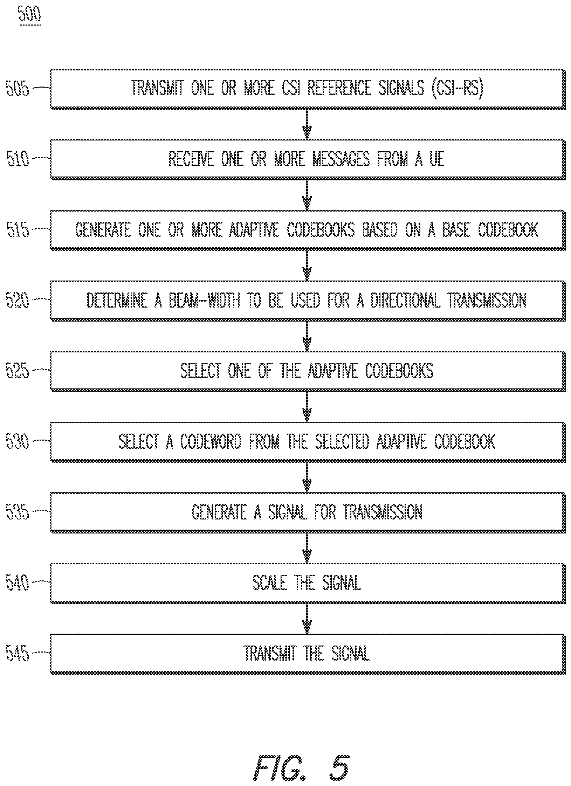

FIG. 5 illustrates the operation of a method of communication in accordance with some embodiments. It is important to note that embodiments of the method 500 may include additional or even fewer operations or processes in comparison to what is illustrated in FIG. 5. In addition, embodiments of the method 500 are not limited to the chronological order that is shown in FIG. 5. In describing the method 500, reference may be made to FIGs. 1-4 and 6-9, although it is understood that the method 500 may be practiced with any other suitable systems, interfaces and components.

In some embodiments, an eNB 104 may perform one or more operations of the method 500, but embodiments are not limited to performance of the method 500 and/or operations of it by the eNB 104. In some embodiments, the UE 102 may perform one or more operations of the method 500 (and/or similar operations). Accordingly, although references may be made to performance of one or more operations of the method 500 by the eNB 104 in descriptions herein, it is understood that the UE 102 may perform the same operation(s), similar operation(s) and/or reciprocal operation(s), in some embodiments.

In addition, while the method 500 and other methods described herein may refer to eNBs 104 or UEs 102 operating in accordance with 3GPP standards, 5G standards and/or other standards, embodiments of those methods are not limited to just those eNBs 104 or UEs 102 and may also be practiced on other devices, such as a Wi-Fi access point (AP) or user station (STA). In addition, the method 500 and other methods described herein may be practiced by wireless devices configured to operate in other suitable types of wireless communication systems, including systems configured to operate according to various IEEE standards such as IEEE 802.11. The method 500 may also refer to an apparatus for a UE 102 and/or eNB 104 and/or other device described above.

It should also be noted that embodiments are not limited by references herein (such as in descriptions of the methods 500, 600, 700, 800 and/or other descriptions herein) to transmission, reception and/or exchanging of elements such as frames, messages, requests, indicators, signals or other elements. In some embodiments, such an element may be generated, encoded or otherwise processed by processing circuitry (such as by a baseband processor included in the processing circuitry) for transmission. The transmission may be performed by a transceiver or other component, in some cases. In some embodiments, such an element may be decoded, detected or otherwise processed by the processing circuitry (such as by the baseband processor). The element may be received by a transceiver or other component, in some cases. In some embodiments, the processing circuitry and the transceiver may be included in a same apparatus. The scope of embodiments is not limited in this respect, however, as the transceiver may be separate from the apparatus that comprises the processing circuitry, in some embodiments.

At operation 505, the eNB 104 may transmit one or more channel state information (CSI) reference signals (CSI-RS). In some embodiments, the CSI-RS may be mapped to one or more antenna ports. In a non-limiting example, an antenna port may be mapped to one or more of the following: frequency resources (including but not limited to one or more resource elements (REs) and/or resource blocks (RBs)); time resources (including but not limited to one or more symbol periods); one or more transmit antennas; and/or other resource(s).

At operation 510, the eNB 104 may receive one or more messages from the UE 102. The message(s) may include information, such as control information, that may be used by the eNB 104 for one or more operations, including but not limited to operations of the method 500. In some embodiments, the eNB 104 may receive one or more control messages from the UE 102, although embodiments are not limited to control messages. For instance, a data message from the UE 102 may include control information that the eNB 104 may use for one or more operations, including but not limited to operations of the method 500.

In some embodiments, the message(s) may include any suitable information related to communication between the UE 102 and the eNB 104, including but not limited to information related to an establishment of connectivity between the UE 102 and the eNB 104, information related to directional transmission by the eNB 104, information related to codebooks and/or other information.

It should be noted that embodiments are not limited to the chronological order shown in FIG. 5. In some embodiments, one or more operations may be performed multiple times. As an example, multiple messages may be received separately. For instance, the eNB 104 may receive a first message, may perform a first operation after reception of the first message and may receive a second message after performance of the first operation. It should be noted that embodiments may not necessarily include all operations shown in FIG. 5.

At operation 515, the eNB 104 may generate one or more adaptive codebooks based on a base codebook. In some embodiments, the base codebook may include one or more codewords. The adaptive codebooks may include codewords. For instance, each adaptive codebook may include one or more codewords. The codewords (of the base codebook and of the adaptive codebooks) may be used for directional transmission of a signal by an antenna array of antenna elements. In a non-limiting example, a codeword may include scale values, the bit positions within the codeword may be mapped to the antenna elements, and the scale values may be used to scale the signal on the antenna elements. In another non-limiting example, a signal may be scaled based on a predetermined mapping between the antenna elements and positions within the codewords (of the adaptive codebooks and/or base codebook).

In some embodiments, the eNB 104 may determine the codewords of the base codebook to correspond to different transmit directions when the antenna elements of the antenna array are scaled by the scalar values of the different codewords of the base codebook. In some embodiments, the eNB 104 may generate codewords of the adaptive codebooks for directional transmissions in different transmit directions.

In some embodiments, the eNB 104 may generate a plurality of adaptive codebooks based on a base codebook. Each adaptive codebook may be generated for a different beam-width for directional transmissions by an antenna array. In some embodiments, the adaptive codebooks may be generated based at least partly on matrix products of a first matrix and a second matrix. In a non-limiting example, the first matrix (which may be referred to as "W1") may be configurable and the second matrix (which may be referred to as "W2") may include the codewords of the base matrix. The adaptive codebooks may be generated as W1*W2 for different realizations of W1.

In a non-limiting example, the first matrix may be based at least partly on a sequence of complex exponentials. An argument of the sequence of complex exponentials may be based at least partly on a product that includes a configurable broadening factor and a sequence of antenna element indexes of the antenna array. The predetermined plurality of broadening factor values may be used in the first matrix to produce the different beam-widths for the adaptive codebooks, in some cases. The second matrix may include the codewords of the base codebook.

The above example may be extended in accordance with one or more of the following aspects, although the scope of embodiments is not limited in this respect. The product on which the argument of the sequence of complex exponentials is based may include a summation raised to a predetermined exponent. The summation may include a first term and a second term. The first term may be inversely proportional to a first product of two and a difference between a number of antenna elements and one. For a particular value of the antenna element index, the second term may be: directly proportional to a difference between the particular value of the antenna element index and a summation of one half of the number of antenna elements and one; and inversely proportional to a difference between the number of antenna elements and one. For instance, the first matrix may be based on elements such as those below:

$$BE(c, n) = \left| 4 \cdot \pi \cdot c \left( \frac{1}{2(N-1)} + \frac{\left(n - \frac{N}{2} - 1\right)}{N-1} \right)^p \right|, \ n = 1, \dots N$$

In some embodiments, when the antenna array includes antenna elements in a rectangular grid of a horizontal array dimension and a vertical array dimension, and when the antenna elements are configured in accordance with a horizontal polarization and a vertical polarization, the first matrix may be at least partly based on a first Kronecker product and a second Kronecker product. The first Kronecker product may be a Kronecker product of: a set of complex exponentials for the vertical polarization and the horizontal array dimension, and a set of complex exponentials for the vertical polarization and the vertical array dimension. The second Kronecker product may be a Kronecker product of: a set of complex exponentials for the horizontal polarization and the horizontal array dimension, and a set of complex exponentials for the horizontal polarization and the vertical array dimension.

In some embodiments, an argument of the set of complex exponentials for the vertical polarization and the horizontal array dimension may be based at least partly on a first product that includes a first configurable broadening factor and a sequence of antenna element indexes for the horizontal array dimension. An argument of the set of complex exponentials for the vertical polarization and the vertical array dimension may be based at least partly on a second product that includes a second configurable broadening factor and a sequence of antenna element indexes for the vertical array dimension.

In some embodiments, an argument of the set of complex exponentials for the horizontal polarization and the horizontal array dimension may be based at least partly on a third configurable broadening factor. An argument of the set of complex exponentials for the horizontal polarization and the vertical array dimension may be based at least partly on a fourth configurable broadening factor.

At operation 520, the eNB 104 may determine a beam-width to be used for a directional transmission. In a non-limiting example, the beam-width may be indicated by a message from the UE 102. In another non-limiting example, the eNB 104 may determine the beam-width based on one or more factors, including but not limited to feedback from the UE 102, measurements (such as signal quality measurements) for different beam-widths and/or other.

It should be noted that some embodiments may not necessarily include all operations. For instance, some embodiments of the method 500 may not include operation 520. In those embodiments, the eNB 104 may use other information and/or techniques (including but not limited to those described below) for other operation(s), such as selection of a codebook and/or codeword.

At operation 525, the eNB 104 may select one of the adaptive codebooks to be used for the directional transmissions. In some embodiments, the eNB 104 may select one of the adaptive codebooks to be used for directional transmissions in accordance with a beam-width of the selected adaptive codebook, although the scope of embodiments is not limited in this respect. It should be noted that in some embodiments, the base codebook may also be used. For instance, the eNB 104 may select a codebook for usage in the directional transmission, and the selected codebook may be the base codebook or one of the adaptive codebooks.

One or more factors may be used as part of the selection of the adaptaive codebook, including but not limited to the examples below. In a non-limiting example, the eNB 104 may select the codebook based at least partly on the determined beam-width (of operation 520). A mapping between beam-width(s) and broadening factor(s) may be used, in some cases. A mapping between beam-widths and indexes of the adaptive codebooks may be used, in some cases. For instance, a predetermined plurality of broadening factors may be used, and those broadening factors may be mapped to the indexes in a predetermined manner.

In another non-limiting example, one or more messages from the UE 102 may include information that the eNB 104 may use for the selection of the adaptive codebook. For instance, the eNB 104 may receive a message from the UE 102 that indicates a mobile velocity measurement of the UE 102. The eNB 104 may select the adaptive codebook based at least partly on the mobile velocity measurement. In some embodiments, the eNB 104 may select the adaptive codebook further based at least partly on a predetermined mapping between the mobile velocity and the broadening factor. In some embodiments, the eNB 104 may select the adaptive codebook further based at least partly on a predetermined mapping between the mobile velocity and indexes of the adaptive codebooks. For instance, a predetermined plurality of broadening factors may be used, and those broadening factors may be mapped to the indexes in a predetermined manner.

In another non-limiting example, the eNB 104 may receive a message from the UE 102 that may indicate the adaptive codebook to be used by the eNB 104. The message may be based at least partly on the CSI-RS, although the scope of embodiments is not limited in this respect. In another non-limiting example, the eNB 104 may receive a message from the UE that may indicate measurements (such as signal quality measurements and/or other) for the adaptive codebooks. The measurements may be based at least partly on the CSI-RS, although the scope of embodiments is not limited in this respect. The eNB 104 may select the adaptive codebook based at least partly on the measurements. In a non-limiting example, the codebook that corresponds to a maximum signal quality (of the signal quality measurements of the message) may be selected. In another non-limiting example, a codebook for which the signal quality is greater than or equal to a predetermined threshold may be used.

At operation 530, the eNB 104 may select a codeword of the selected adaptive codebook to be used for the directional transmissions. It should be noted that in some embodiments, the base codebook may also be used. For instance, if the eNB 104 selects the base codebook for usage in the directional transmission, the eNB 104 may select one of the codewords from the base codebook to be used for the directional transmission. Accordingly, techniques (such as those given below and/or others) for selection of a codeword from the selected adaptive codebook may also be applied to selection of a codeword from the base codebook (if the base codebook is selected for usage).

In a non-limiting example, the eNB 104 may receive a control message from the UE 102 that may indicate the codeword of the selected adaptive codebook that is to be used. The message may be based at least partly on the CSI-RS, although the scope of embodiments is not limited in this respect. In another non-limiting example, the eNB 104 may receive a control message from the UE 102 that may indicate signal quality measurements for the codewords of the selected adaptive codebook. The measurements may be based at least partly on the CSI-RS, although the scope of embodiments is not limited in this respect. The eNB 104 may select, based at least partly on the signal quality measurements, one of the codewords of the selected adaptive codebook to be used for the directional transmissions. In a non-limiting example, the codeword that corresponds to a maximum signal quality (of the signal quality measurements of the message) may be selected. In another non-limiting example, a codeword for which the signal quality is greater than or equal to a predetermined threshold may be used.

The examples given above are not limiting, as the eNB 104 may use any suitable technique to select a codebook may be used. In addition, the eNB 104 may use any suitable technique to select a codeword within a codebook.

At operation 535, the eNB 104 may generate a signal for transmission. For instance, the signal may be based on data to be transmitted to the UE 102. At operation 540, the eNB 104 may scale the signal in accordance with a codeword (such as the codeword selected at operation 530). At operation 545, the eNB 104 may transmit the signal.

In some embodiments, the eNB 104 may generate a downlink signal based on downlink data. The eNB 104 may scale the downlink signal in accordance with the selected codeword (including but not limited to a codeword indicated in a message from the UE 102) for transmission by antenna elements of the antenna array. The signal may be scaled based on a predetermined mapping between the antenna elements and positions within the codewords of the adaptive codebooks.

In some embodiments, an apparatus of an eNB 104 may comprise memory. The memory may be configurable to store the adaptive codebooks. The memory may store one or more other elements and the apparatus may use them for performance of one or more operations. In some embodiments, the apparatus of the eNB 104 may include a transceiver. The transceiver may be configurable to be coupled to the antenna array for the directional transmissions. The transceiver may transmit and/or receive other frames, PPDUs, messages and/or other elements. In some embodiments, the apparatus may include the antenna array, although the scope of embodiments is not limited in this respect. The apparatus may include processing circuitry, which may perform one or more operations (including but not limited to operation(s) of the method 500 and/or other methods described herein). The processing circuitry may include a baseband processor. The baseband circuitry and/or the processing circuitry may perform one or more operations described herein, including but not limited to generation of the adaptive codebooks.

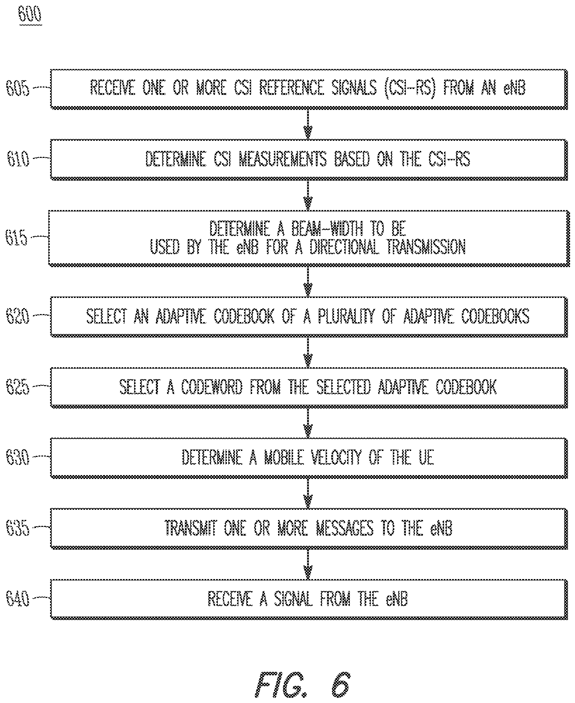

FIG. 6 illustrates the operation of another method of communication in accordance with some embodiments. As mentioned previously regarding the method 500, embodiments of the method 600 may include additional or even fewer operations or processes in comparison to what is illustrated in FIG. 6 and embodiments of the method 600 are not limited to the chronological order that is shown in FIG. 6. In describing the method 600, reference may be made to FIGs. 1-5 and 7-10, although it is understood that the method 600 may be practiced with any other suitable systems, interfaces and components. In addition, embodiments of the method 600 may be applicable to UEs 102, eNBs 104, APs, STAs and/or other wireless or mobile devices. The method 600 may also be applicable to an apparatus for a UE 102, eNB 104 and/or other device described above.

In some embodiments, the UE 102 may perform one or more operations of the method 600, but embodiments are not limited to performance of the method 600 and/or operations of it by the UE 102. In some embodiments, the eNB 104. may perform one or more operations of the method 600 (and/or similar operations). Accordingly, although references may be made to performance of one or more operations of the method 600 by the UE 102 in descriptions herein, it is understood that the eNB 104 may perform one or more same operation(s), similar operation(s) and/or reciprocal operation(s), in some embodiments.

It should be noted that the method 600 may be practiced by the UE 102 and may include exchanging of elements, such as frames, signals, messages and/or other elements, with the eNB 104. Similarly, the method 500 may be practiced by an eNB 104 and may include exchanging of such elements with a UE 102. In some cases, operations and techniques described as part of the method 500 may be relevant to the method 600. In addition, embodiments of the method 600 may include one or more operations performed by the UE 102 that may be the same as, similar to or reciprocal to one or more operations described herein performed by the eNB 104 (including but not limited to operations of the method 500). As an example, an operation of the method 600 may be the same as or similar to an operation of the method 500. As another example, an operation of the method 500 may include a downlink transmission by the eNB that is similar to an uplink transmission by the UE 102 included in the method 600.

In addition, previous discussion of various techniques and concepts may be applicable to the method 600 in some cases, including beam-forming, directional transmission, codebooks, adaptive codebooks, codewords, CSI, CSI-RS, and/or others.

At operation 605, the UE 102 may receive one or more CSI-RS from the eNB 104. At operation 610, the UE 102 determine CSI measurements based on the CSI-RS. At operation 615, the UE 102 may determine a beam-width to be used by the eNB 104 for a directional transmission. At operation 620, the UE 102 select an adaptive codebook of a plurality of adaptive codebooks. At operation 625, the UE 102 may select a codeword from the selected adaptive codebook. At operation 630, the UE 102 may determine a mobile velocity of the UE 102. At operation 635, the UE 102 may transmit one or more messages to the eNB 104. The message(s) may include one or more of a codebook index to be used by the eNB 104, a codeword index to be used by the eNB 104, signal quality measurements, CSI, CSI measurements, mobile velocity of the UE 102 and/or other. At operation 640, the UE 102 may receive a signal from the eNB 104. In anon-limiting example, the signal may be a downlink data signal transmitted by the eNB 104 in accordance with a directional transmission based on one of the codewords of a codebook.

The UE 102 generates an adaptive codebook of codewords based at least partly on a matrix product of: a first matrix based at least partly on a sequence of complex exponentials for which an argument is based at least partly on a configurable broadening factor, and a second matrix that includes codewords of a base codebook. The UE 102 determines channel state information (CSI) for antenna elements of an antenna array of the eNB 104 based on CSI reference signals (CSI-RS) received from the eNB 104. The UE 102 determines a plurality of signal quality measurements based on correlations between the CSI and the codewords of the adaptive codebook. The UE 102 transmits an uplink control message that indicates the codeword of the adaptive codebook for which the signal quality measurement of the plurality of signal quality measurements is largest The UE 102 may receive a downlink signal from the eNB 104 in accordance with the codeword of the adaptive codebook indicated in the uplink control message.

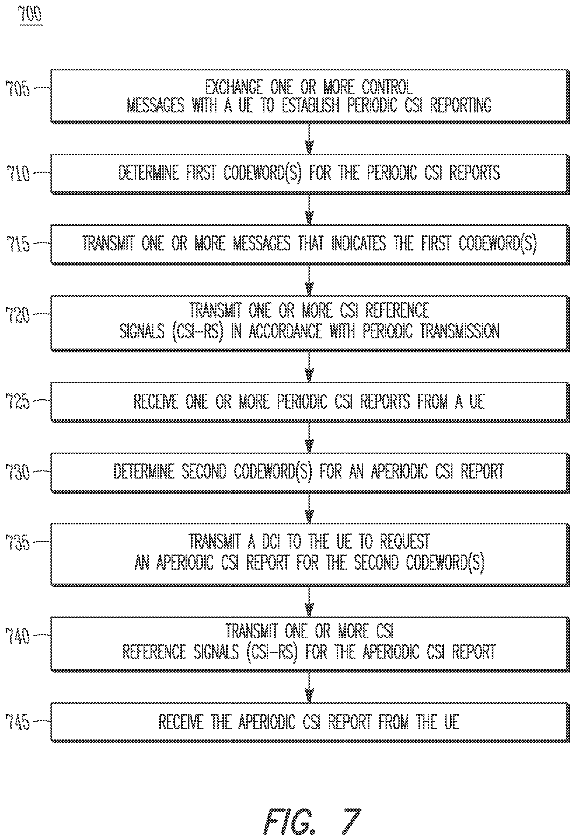

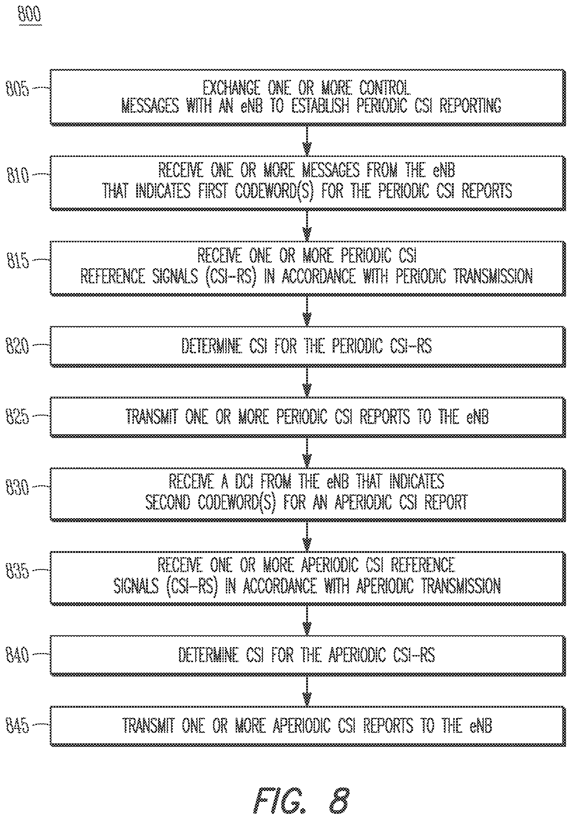

FIG. 7 illustrates the operation of another method of communication in accordance with some embodiments. FIG. 8 illustrates the operation of another method of communication in accordance with some embodiments. Embodiments of the methods 700 and/or 800 may include additional or even fewer operations or processes in comparison to what is illustrated in FIGs. 7-8 and embodiments of the methods 700 and 800 are not limited to the chronological order that is shown in FIGs. 7-8. In describing the methods 700 and/or 800, reference may be made to any of FIGs. 1-10, although it is understood that the methods 700 and/or 800 may be practiced with any other suitable systems, interfaces and components. In addition, embodiments of the methods 700 and/or 800 may be applicable to UEs 102, eNBs 104, APs, STAs and/or other wireless or mobile devices. The methods 700 and/or 800 may also be applicable to an apparatus for a UE 102, eNB 104 and/or other device described above.

In some embodiments, the eNB 104 may perform one or more operations of the method 700, but embodiments are not limited to performance of the method 700 and/or operations of it by the eNB 104. In some embodiments, the UE 102 may perform one or more operations of the method 700 (and/or similar operations). Accordingly, although references may be made to performance of one or more operations of the method 700 by the eNB 104 in descriptions herein, it is understood that the UE 102 may perform one or more same operation(s), similar operation(s) and/or reciprocal operation(s), in some embodiments.

In some embodiments, the UE 102 may perform one or more operations of the method 800, but embodiments are not limited to performance of the method 800 and/or operations of it by the UE 102. In some embodiments, the eNB 104 may perform one or more operations of the method 800 (and/or similar operations). Accordingly, although references may be made to performance of one or more operations of the method 800 by the UE 102 in descriptions herein, it is understood that the eNB 104 may perform one or more same operation(s), similar operation(s) and/or reciprocal operation(s), in some embodiments.

It should be noted that the method 800 may be practiced by the UE 102 and may include exchanging of elements, such as frames, signals, messages and/or other elements, with the eNB 104. Similarly, the method 700 may be practiced by an eNB 104 and may include exchanging of such elements with a UE 102. In some cases, operations and techniques described as part of the method 700 may be relevant to the method 800. In addition, embodiments of the method 800 may include one or more operations performed by the UE 102 that may be the same as, similar to or reciprocal to one or more operations described herein performed by the eNB 104 (including but not limited to operations of the method 700). As an example, an operation of the method 800 may be the same as or similar to an operation of the method 700. As another example, an operation of the method 700 may include a downlink transmission by the eNB that is similar to an uplink transmission by the UE 102 included in the method 800.

In addition, previous discussion of various techniques and concepts may be applicable to the methods 700 and/or 800 in some cases, including beam-forming, directional transmission, codebooks, adaptive codebooks, codewords, CSI, CSI-RS, and/or others.

In some embodiments, the eNB 104 may be configured to operate in accordance with a New Radio (NR) protocol and/or NR standard, although the scope of embodiments is not limited in this respect. In some embodiments, the eNB 104 may be configured to operate in accordance with a Fifth Generation (5G) protocol and/or 5G standard, although the scope of embodiments is not limited in this respect.

It should be noted that references herein to an eNB 104 are not limiting. In some embodiments, one or more operations, methods and/or techniques (such as those described herein) may be practiced by a base station component (and/or other component), including but not limited to a Generation Node-B (gNB), a serving cell, a transmit receive point (TRP) and/or other. In some embodiments, the base station component may be configured to operate in accordance with a New Radio (NR) protocol and/or NR standard, although the scope of embodiments is not limited in this respect. In some embodiments, the base station component may be configured to operate in accordance with a Fifth Generation (5G) protocol and/or 5G standard, although the scope of embodiments is not limited in this respect.

At operation 705, the eNB may exchange one or more control messages with a UE 102 to establish periodic CSI reporting. Such message(s) may include information such as time resource(s), frequency resource(s), transmit antennas, antenna ports and/or other resources to be used for transmission of CSI by the UE 102. Such message(s) may also include information related to scheduling, such as a periodicity of the CSI transmission by the UE 102 and/or other. In a non-limiting example, one or more aspects of the CSI periodic reporting may be established on a semi-persistent basis, in which resources are not necessarily explicitly signaled each time. For instance, the resources may be established once, and the transmission of the CSI may be performed multiple times using the established resources.

In a non-limiting example, the eNB 104 may transmit one or more radio resource control (RRC) messages that indicate the time and frequency resources.

At operation 710, the eNB 104 may determine one or more codewords for the periodic CSI reports. In some embodiments, the eNB 104 may configure one or more codewords for the periodic CSI reports. The codewords determined for the periodic CSI reports may be referred to herein as "first codewords" for clarity to distinguish them from other codewords used in other operations, but such references are not limiting. Other codewords used for aperiodic CSI reports may be referred to herein as "second codewords" for clarity, but such references are also not limiting.

In some embodiments, the first codewords may be exclusive to the second codewords. The scope of embodiments is not limited in this respect, however. In some embodiments, one or more of the first codewords may be included in the second codewords.

At operation 715, the eNB 104 may transmit one or more messages (including but not limited to control information messages) that indicate, for the UE 102, information related to the CSI reporting using first codeword(s). In some embodiments, the messages may indicate other information, such as time resources, frequency resources, antenna ports, transmit antennas and/or other information for the transmission of the periodic CSI reports.

At operation 720, the eNB 104 may transmit one or more CSI-RS in accordance with periodic transmission. At operation 725, the eNB 104 may receive one or more periodic CSI reports from the UE 102. The periodic CSI reports may be received periodically, such as in accordance with a periodic schedule, although the scope of embodiments is not limited in this respect.

At operation 730, the eNB 104 may determine one or more codewords for an aperiodic CSI report. In some embodiments, the eNB 104 may configure the one or more codewords for the aperiodic CSI report. As described above, the codewords for the aperiodic CSI report may be referred to for clarity and without limitation as "second codewords" in descriptions herein. At operation 735, the eNB 104 may transmit a DCI to the UE 102 to request an aperiodic CSI report. In some embodiments, the eNB 104 may transmit a DCI to the UE 102 to request an aperiodic CSI report for the second codeword(s). At operation 740, the eNB 104 may transmit one or more CSI-RS for the aperiodic CSI report. At operation 745, the eNB 104 may receive the aperiodic CSI report from the UE 102.

In some embodiments, the eNB 104 may transmit first CSI-RS periodically in predetermined first time and frequency resources The eNB 104 may receive periodic CSI reports from the UE 102 that indicate CSI measurements based on correlations, at the UE 102, between the first CSI-RS and first predetermined codewords. The eNB 104 may determine second codewords for an aperiodic CSI report from the UE 102. The first codewords and second codewords may include antenna element scale values to enable directional transmissions by the eNB 104. The eNB 104 may determine the second codewords to have transmission beam-widths that are less than an average transmission beam-width of the first codewords. The eNB 104 may transmit a DCI message to request an aperiodic CSI report from the UE 102 based on correlations, at the UE 102, between second CSI-RS and the second codewords. The eNB 104 may transmit the second CSI-RS aperiodically in second time and frequency resources indicated by the DCI message.

In some embodiments, the eNB 104 may transmit the first CSI-RS in accordance with a first predetermined plurality of antenna ports. The eNB 104 may transmit the second CSI-RS in accordance with a second predetermined plurality of antenna ports. Each antenna port of the first and second pluralities of antenna ports may be mapped to one or more resource elements (REs), one or more symbol periods, and one or more transmit antennas. In some embodiments, the first plurality of antenna ports may be exclusive to the second plurality of antenna ports. The scope of embodiments is not limited in this respect, however. In some embodiments, one or more antenna ports of the first plurality may be included in the second plurality of antenna ports.

In some embodiments, the eNB 104 may select a number of antenna ports in the second plurality of antenna ports to be greater than a number of antenna ports in the first plurality of antenna ports.

In some embodiments, each of the first and second codewords may be based on a vector of complex exponentials. Arguments of the complex exponentials may be directly proportional to an antenna element index and inversely proportional to an oversampling factor. The eNB 104 may determine the second codewords based on a second oversampling factor that is greater than a first oversampling factor of the first codewords.

In some embodiments, the first codewords and second codewords may include antenna element scale values to enable directional transmissions by the eNB 104 by an antenna array of a first number of columns and a second number of rows. Each of the first and second codewords may be based on a Kronecker product of a first vector of complex exponentials for the columns of the antenna array and a second vector of complex exponentials for the rows of the antenna array. The eNB 104 may determine the second codewords based on a second pair of oversampling factors for the first and second vectors of complex exponentials that is greater than a first pair of oversampling factors for the first and second vectors of complex exponentials.

In some embodiments, the eNB 104 may transmit the first CSI-RS without pre-coding by the first codewords. The eNB 104 may transmit the second CSI-RS without pre-coding by the second codewords. Embodiments are not limited as such, however. In some embodiments, pre-coding on the first codeword(s) and/or second codeword(s) may be used.

At operation 805, the UE 102 may exchange one or more control messages with the eNB 104 to establish periodic CSI reporting. At operation 810, the UE 102 may receive control information from the eNB 104 that indicates first codeword(s) for the periodic CSI reports. In some embodiments, other information, such as time resources, frequency resources, antenna ports, transmit antennas, other resource information, scheduling information and/or other information may be included. In a non-limiting example, the UE 102 may receive one or more radio resource control (RRC) messages that indicate the control information and/or other information (including but not limited to the time and frequency resources).

At operation 815, the UE 102 may receive one or more CSI-RS in accordance with periodic transmission. The CSI-RS may be referred to as "periodic CSI-RS" for clarity and without limitation to distinguish from other CSI-RS. For instance, other CSI-RS that may be transmitted in accordance with aperiodic transmission may be referred to as "aperiodic CSI-RS" for clarity and without limitation. At operation 820, the UE 102 may determine CSI for the periodic CSI-RS. Other information, such as signal quality measurements, may be determined in some embodiments. At operation 825, the UE 102 may transmit one or more periodic CSI reports to the eNB 104. In some embodiments, the periodic CSI reports may be transmitted periodically, although the scope of embodiments is not limited in this respect.

At operation 830, the UE 102 may receive a DCI from the eNB 104 that indicates second codeword(s) for an aperiodic CSI report. At operation 835, the UE 102 may receive one or more aperiodic CSI reference signals (CSI-RS) in accordance with aperiodic transmission. At operation 840, the UE 102 may determine CSI for the aperiodic CSI-RS. Other information, such as signal quality measurements, may be determined in some embodiments. At operation 845, the UE 102 may transmit one or more aperiodic CSI reports to the eNB 104.

In some embodiments, the UE 102 may determine first CSI measurements based on correlations between first CSI-RS and first predetermined codewords. The first CSI-RS may be received from the eNB 104 periodically in predetermined first time and frequency resources. The UE 102 may transmit a periodic CSI report that indicates the first CSI measurements. The UE 102 may receive a DCI message from the eNB 104 that indicates second codewords for an aperiodic CSI report from the UE 102. In some embodiments, the DCI may further indicate second time and frequency resources. The UE 102 may determine second CSI measurements based on correlations between the second codewords and second CSI-RS received in the second time and frequency resources. The UE 102 may transmit an aperiodic CSI report that indicates the second CSI measurements.

In some embodiments, the first codewords and second codewords may include antenna element scale values to enable directional transmissions or precoding by the eNB 104. Transmission beam-widths of the second codewords may be less than an average transmission beam-width of the first codewords.

In some embodiments, the UE 102 may receive the first CSI-RS in accordance with reception on a first predetermined plurality of antenna ports. The UE 102 may receive the second CSI-RS in accordance with reception on a second predetermined plurality of antenna ports. Each antenna port of the first and second pluralities of antenna ports may be mapped to one or more of: frequency resources (including but not limited to one or more resource elements (REs), resource blocks (RBs) and/or other); time resources (including but not limited to one or more symbol periods); one or more transmit antennas; and/or other. In some embodiments, the antenna ports of the first and second pluralities may be exclusive. The scope of embodiments is not limited in this respect, however. In some embodiments, one or more of the antenna ports of the first plurality may be included in the second plurality.

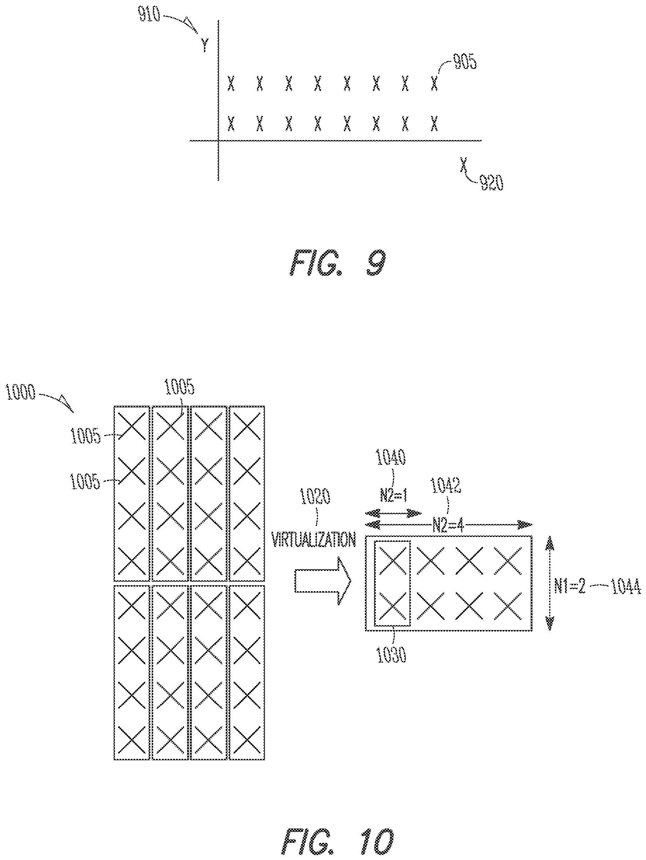

FIG. 9 illustrates an example antenna array in accordance with some embodiments. FIG. 10 illustrates another example antenna array in accordance with some embodiments. It should be noted that the examples shown in FIGs. 9-10 may illustrate some or all of the concepts and techniques described herein in some cases, but embodiments are not limited by the examples. For instance, embodiments are not limited by the name, number, type, size, ordering, arrangement and/or other aspects of the antennas, antenna elements, antenna arrays and/or other elements as shown in FIGs. 9-10. Although some of the elements shown in the examples of FIGs. 9-10 may be included in a 3GPP LTE standard and/or other standard, embodiments are not limited to usage of such elements that are included in standards.

Referring to FIG. 9, an example antenna array 900 of antenna elements 905 has a dimension of 2 in the y-axis (as indicated by 910) and a dimension of 8 in the x-axis (as indicated by 920). Referring to FIG. 10, the FD-MIMO antenna 1000 (with antenna elements 1005) is virtualized (as indicated by 1020) to N1=2 (as indicated by 1044), N2=4 (as indicated by 1042), P=2 antenna port layout.

In some embodiments, increasing and/or maximizing beam-forming gain using a large number of antennas (and/or antenna elements) may introduce a narrow beam-forming or pin pointing beam-forming. In these and some other cases, channel quality between UE 102 and eNB 104 may be significantly changed according to user mobility (such as mobility of the UE 102). In other words, narrow beamforming may be more vulnerable to user mobility and/or channel variation. Moreover, as a number of antennas (and/or antenna elements) increases, a search complexity and a feedback overhead may be increased, in some cases.

In 3GPP LTE/LTE-A, codebook based beamforming may be used as a closed loop MIMO scheme. The eNB 104 may transmit CSI-RS. The UE 102 may measure and/or estimate a channel between the eNB 104. The UE 102 may determine a best and/or preferred precoding matrix index (PMI), which may improve and/or maximize factors such as throughput, SNR and/or other(s).

In a non-limiting example, in case of a rank-1 transmission in which a number of receive antennas is equal to one, a received signal may be denoted as follows.

$$y = h^T w x + n$$

In the above, y is a received signal, $h^T$ is a channel between the transmitter and the receiver, w is a precoding vector, *x* is a transmitted signal, and *n* is noise. The receiver may determine a precoding vector and may feedback a corresponding index to the transmitter. For instance, the precoding vector w may be determined as follows.

$$w = c_m, \ m = \arg\max_k |h^T c_k|$$

In the above, $c_k$ is a *k*-th element in a codebook set C.

In some embodiments, an additional codebook and mechanism may be used to provide a beam broadening functionality to an existing codebook. In some cases, the broadening functionality may overcome (at least partly) issues (including but not limited to those described above) due to a large number of antennas and/or antenna elements. Non-limiting examples of such issues are given below. An example issue may be related to codebook overhead and/or complexity reduction. Another example issue may be related to mobility of the UE 102. Another example issue may be related to larger AS handling: wider beam-width in larger AS will help to gather more ray/path. In this case, wider beam-width may also be more robust against blockage.

In some embodiments, an adaptive beam-width codebook or multi-level codebook may be determined as follows.

$$W = B_b \cdot C_m$$

In the above, the matrix W may be (and/or may be based on) a codebook which the receiver may use for CQI calculation and which the transmitter may use for transmission. In addition, $B_b$ is the *b*-th element in a broadening

codebook set B, $C_m$ is the $m$-th element in a conventional codebook set C. It should be noted that $C_m$ may be a composite codebook. In a non-limiting example, $C_m$ may be a two stage codebook in a 3GPP LTE standard (including but not limited to release 13), such as a class A codebook and/or other codebook. For instance, the following expression may be applicable.

$$C_m = W_{i11,i12,i2}^{(R)} = W_{1\,i11,i12}^{(R)} W_{2\,i2}^{(R)}.$$

A selection of which $B_b$ is used may be based at least partly on estimation of user mobility. Accordingly, the selection may be instructed by higher layer signaling, in some cases. Different $b$ can be used for different codebook index. A selection of which $C_m$ is used may be based at least partly on the following, although the scope of embodiments is not limited in this respect.

$$w = B_b \cdot c_m, \; m = \arg\max_K |h^T \cdot B_b \cdot c_k|$$

It should be noted that for cases in which a rank-1 transmission is used, a vector form of equation(s) above may be used rather than a matrix form, although the scope of embodiments is not limited in this respect. Techniques described herein may be extended to higher rank transmissions, which may result in matrix forms in one or more equations above.

It should be noted that the above may be an example under narrow band transmission. An actual implementation may vary. PMI feedback may be done similar to a method for category A codebook in release 13 LTE, in some embodiments.

In some embodiments, broadening and/or a "broadening codebook" may be used. References to broadening or to a broadening codebook are not limiting, however, as one or more of the techniques, operations and/or methods described herein may be used in any suitable scenario(s), embodiment(s) and/or implementation(s).

In a non-limiting example, broadening phases below may be added to antennas in one or more dimensions and in one or more polarizations. In some embodiments, the broadening phases may be added to the antennas in each dimension and polarization.

$$BE(c, n) = \left| 4 \cdot \pi \cdot c \left( \frac{1}{2(N-1)} + \frac{\left(n - \frac{N}{2} - 1\right)}{N-1} \right)^p \right|, \; n = 1, \dots N$$

In the above, c is a broadening factor which can be configured. In addition, $p$ may be an integer (non-limiting example values include $p = 2$ or $4$). The parameter n may be an antenna index (for instance, in each dimension and polarization). The parameter $N$ may be a total number of antennas and/or antenna elements (for instance, based on each dimension and polarization).

In some cases, the broadening functionality may be applied to baseband/digital beamforming. The parameter $n$ may be an index of antenna port and N may be a total number of antenna ports in the dimension(s) and polarization(s). For example, referring to FIG. 9, the example antenna port layout is (8, 2), with 16 antenna ports in the x-axis, 2 antenna ports in the y-axis, and two different polarizations. A first polarization is illustrated as '\' (e.g. V pole) as indicated by and the second polarization is illustrated as '/' (e.g. H pole). The antenna ports in the x-axis may be used for horizontal beamforming and the antenna ports in the y-axis may be used for vertical beamforming. In this case, N1 and N2 are as follows.

$$N_1 = N_{x,V} = N_{x,H} = 8, \; N_2 = N_{y,V} = N_{y,H} = 2.$$

It should be noted that different values of c may be used for different dimensions and/or polarizations.

The parameter $B_b$ may be expressed as

$$\begin{bmatrix} diag(exp\{j * BE(c_{x,V}, 1:N_{x,V})\} \otimes exp\{j * BE(c_{y,V}, 1:N_{y,V})\}) & 0 \\ 0 & diag(exp\{j * BE(c_{x,H}, 1:N_{x,H})\} \otimes exp\{j * BE(c_{y,H}, 1:N_{y,H})\}) \end{bmatrix}$$

In the above, the function diag(v) (for a vector v) may be a function which make a diagonal matrix with v, $\otimes$ is a Kronecker product, $[v_1 ; v_2]$ is same as $[v_1^T \; v_2^T]^T$, $[]^T$ is a transpose operation, $c_{x,V}$, $c_{x,H}$, $c_{y,V}$, $c_{y,H}$ may represent broadening factor for each dimension and polarization. In some embodiments, for a particular $b$, $c_{x,V}$, $c_{x,H}$, $c_{y,V}$, $c_{y,H}$ may be predetermined.

In some embodiments, a 3GPP LTE standard may include one or more of the above techniques. The UE 102 configured with higher layer parameter *CSI-Reporting-Type,* and *CSI-Reporting Type* is set to 'CLASS A', each PMI value corresponds to three codebook indices given in Table 7.2.4-10, 7.2.4-11, 7.2.4-12, 7.2.4-13, 7.2.4-14, 7.2.4-15, 7.2.4-16, or 7.2.4-17, in which

$$\varphi_n = e^{j \pi n/2}$$

$$u_m = \left[ e^{j\delta_{m,2,0}} \quad e^{j\frac{2\pi m}{O_2 N_2}} \cdot e^{j\delta_{m,2,1}} \quad \ldots \quad e^{j\frac{2\pi m(N_2-1)}{O_2 N_2}} \cdot e^{j\delta_{m,2,N_2-1}} \right]$$

$$v_{l,m} = \left[ e^{j\delta_{m,1,0}} \cdot u_m \quad e^{j\frac{2\pi l}{O_1 N_1}} \cdot e^{j\delta_{m,1,1}} \cdot u_m \quad \ldots \quad e^{j\frac{2\pi l(N_1-1)}{O_1 N_1}} \cdot e^{j\delta_{m,1,N_1-1}} \cdot u_m \right]^T$$

In addition,

$$\delta_{m,k,i} = \left| 4\pi c_{m,k} \left( \frac{1}{2(N_k-1)} \cdot \frac{(i-N_k/2-1)}{(N_k-1)} \right)^r \right| \quad \text{if } N_k \neq 1$$

and

$$\delta_{m,k,i} = 1$$

otherwise

The parameter $c_{m,k}$ is a beam broadening factor which may be set differently for different dimension/polarization (index $k$), and different codebook index (index $m$).

In some embodiments, an adaptive beam-width codebook may be given by

$$W = B_b \cdot C_m$$

A receiver may use the adaptive beam-width codebook for CQI calculation and transmitter may use the adaptive beam-width codebook for transmission. In some embodiments, $B_b$ may be a b-th element in a broadening codebook set B. The index b may be determined by estimation of user mobility and/or other factor(s). In some embodiments, the UE 102 may request a different broadening to the eNB 104. In some embodiments, the value of b may be instructed/signaled/determined prior to CSI-RS measurement. In some embodiments, the value of m may be determined at the receiver for a given $B_b$. In some embodiments, $B_b$ may include (and/or may be based on) broadening vectors which correspond to different dimension(s) and different polarization(s). In some embodiments, $B_b$ may be as follows.

$$\left[ \begin{matrix} diag(exp\{j*BE(c_{x,V},1:N_{x,V})\} \otimes exp\{j*BE(c_{y,V},1:N_{y,V})\}) & 0 \\ 0 & diag(exp\{j*BE(c_{x,H},1:N_{x,H})\} \otimes exp\{j*BE(c_{y,H},1:N_{y,H})\}) \end{matrix} \right]$$

In some embodiments, "BE" may be as follows.

$$BE(c, n) = \left| 4\pi c \left( \frac{1}{2(N-1)} + \frac{\left(n - \frac{N}{2} - 1\right)}{N-1} \right)^p \right|$$

In some embodiments, different b may be instructed/applied for different codebook indexes. In some embodiments, the UE 102 configured with higher layer parameter eMIMO-Type, and eMIMO-Type may be set to 'CLASS A', each PMI value may correspond to three codebook indices (including but not limited to indices given in table 7.2.4-10, 7.2.4-11, 7.2.4-12, 7.2.4-13, 7.2.4-14, 7.2.4-15, 7.2.4-16, or 7.2.4-17 of the following 3GPP LTE standard - 3GPP TS 36.21.3v13.1.1), modified as

$$\varphi_n = e^{j\pi n/2}$$

$$u_m = \left[ e^{j\delta_{m,2,0}} \quad e^{j\frac{2\pi n}{O_2 N_2}} \cdot e^{j\delta_{m,2,1}} \quad \ldots \quad e^{j\frac{2\pi n(N_2-1)}{O_2 N_2}} \cdot e^{j\delta_{m,2,N_2-1}} \right]$$

$$v_{l,m} = \left[ e^{j\delta_{m,1,0}} \cdot u_m \quad e^{j\frac{2\pi l}{O_1 N_1}} \cdot e^{j\delta_{m,1,1}} \cdot u_m \quad \ldots \quad e^{j\frac{2\pi l(N_1-1)}{O_1 N_1}} \cdot e^{j\delta_{m,1,N_1-1}} \cdot u_m \right]^T$$

In some embodiments,

$$\delta_{m,k,l} = \left| 4\pi c_{m,k} \left( \frac{1}{2(N_k-1)} + \frac{(l - N_k/2 - 1)}{(N_k-1)} \right)^p \right|$$

if $N_k \neq 1$ otherwise $\delta_{m,k,l} = 1$

In some embodiments, $c_{m,k}$ is a beam broadening factor which may be set differently for different dimension/polarization (index $k$), and/or different codebook index (index $m$). In some embodiments, $c_{m,k}$ may be configured as a higher layer parameter. In some embodiments, for larger $c_{m,k}$ values, smaller $O_k$ may be applied. In some embodiments, a value of the smaller $O_k$ may be 1.

In some embodiments, techniques such as Elevation Beamforming and Full Dimension Multiple Input Multiple Output (FD-MIMO) for downlink data transmission may be used. In a non-limiting example, one or more such techniques may be used in accordance with a 3GPP LTE standard, including but not limited to Rel-13. Such Elevation Beamforming and/or FD-MIMO may be based on one or more CSI feedback schemes, including but not limited to the following examples. In a first example, non-precoded CSI reference signals (CSI-RS) may be used, such as in Class A FD-MIMO. In a second example, beam-formed CSI-RS may be used, such as in Class B FD-MIMO. As part of operation in accordance with Class A, each CSI-RS antenna port of CSI-RS resource(s) may be transmitted by the eNB 104. As part of operation in accordance with Class B, beamforming on CSI-RS antenna ports may be used. The beamforming on CSI-RS antenna ports may provide an additional coverage advantage of Class B over Class A schemes, in some cases. Embodiments are not limited by these examples.

In some embodiments, codewords of a Class A codebook for a uniform antenna array may be of a form W1*W2, a matrix product of matrices W1 and W2. The matrix W1 may be based on codeord(s) that may include and/or may be based on one or more Discrete Fourier Transform (DFT) vectors. In some embodiments, a Kronecker Product (KP) structure may be used, although the scope of embodiments is not limited in this respect. A non-limiting example follows.

$X_1$ is $O_1$ oversampled DFT vector of length $N_1$: $v_l =$

$$\left[ 1 \quad e^{\frac{j2\pi l}{N_1 O_1}} \quad \ldots \quad e^{\frac{j2\pi(N_1-1)l}{N_1 O_1}} \right]^t$$

$X_2$ is $O_2$ oversampled DFT vector of length $N_2$: $v_l =$

$$\left[1 \quad e^{\frac{j2\pi l}{N_2 O_2}} \quad \cdots \quad e^{\frac{j2\pi(N_2-1)l}{N_2 O_2}}\right]^t$$

$$W_1 = \begin{pmatrix} X_1^{m_1} \otimes X_2^{m_2} & 0 \\ 0 & X_1^{m_1} \otimes X_2^{m_2} \end{pmatrix}$$

The N1 and N2 may correspond to numbers of antenna ports in the first and second dimension. The O1 and O2 may correspond to the DFT (beam) oversampling.

In some embodiments, one or more types of CSI reporting may be supported. For instance, periodic and aperiodic CSI reporting may be supported as part of a 3GPP LTE standard and/or protocol. In some embodiments, periodic CSI reporting may be used to indicate the channel quality of a downlink channel at the UE 102 on a long-term basis. Periodic CSI may be provided by the UE 102 in accordance with a reporting time schedule configured by a serving cell using higher layer signaling (including but not limited to radio resource control (RRC)). Such a time schedule may be predefined and/or predetermined, in some embodiments. In some cases, the periodic CSI reporting may have low overhead and/or low overhead in comparison to aperiodic CSI reporting.

In some embodiments, aperiodic CSI reporting may be used to provide additional information in a reporting instance based on a dynamic CSI request triggered by the serving cell using a CSI request in a downlink control information (DCI) message.

In some embodiments, in carrier aggregation, multiple CSI corresponding to multiple DL cells may be requested by the eNB 104 in accordance with the table below. The set of serving cells for reporting corresponding to CSI request fields '10' and '11' may be configured by RRC signaling, although the scope of embodiments is not limited in this respect.

A non-limiting example is included in the table below for a CSI request field for PDCCH/EDPCCH with uplink DCI format in UE specific search space. The particular cases and the mapping to the corresponding values (00, 01, 10, 11) are not limiting.

| Value of CSI request field | Description |
|---|---|
| '00' | No aperiodic CSI report is triggered |
| '01' | Aperiodic CSI report is triggered for serving cell *c* |
| '10' | Aperiodic CSI report is triggered for a 1st set of serving cells configured by higher layers |
| '11' | Aperiodic CSI report is triggered for a 2nd set of serving cells configured by higher layers |

In the transmission mode 10, multiple CSI corresponding to multiple CSI processes on the same serving frequency may be requested by the eNB 104 in accordance with the table below. The tables above and below may be included in a 3GPP LTE standard and/or other standard, although the scope of embodiments is not limited to usage of such standards. The set of CSI processes for reporting corresponding to CSI request fields '01', '10' and '11' may be configured using RRC signaling. The particular cases and the mapping to the corresponding values (00, 01, 10, 11) are not limiting.

| Values of CSI request field | Description |
|---|---|
| '00' | No aperiodic CSI report is triggered |
| '01' | Aperiodic CSI report is triggered for a set of CSI process(es) configured by higher layers for serving cell *c* |
| '10' | Aperiodic CSI report is triggered for a 1st set of CSI process(es) configured by higher layers |
| '11' | Aperiodic CSI report is triggered for a 2nd set of CSI process(es) configured by higher layers |

In a non-limiting example, the aperiodic CSI triggering may be performed by setting in the DCI formats 0 or 4 the MCS and resource allocation size in such way so that $I_{MCS} = 29$ and $N_{PRB} \leq x$ (e.g. x = 4 or 20).

In some embodiments, CSI reporting based on pre-coding matrix indicators (PMIs) of different beam-widths. The CSI reporting associated with periodic / semi-persistent CSI reporting may be used for PMIs corresponding to wider beam-widths in comparison to PMIs used for aperiodic CSI reporting.

In some embodiments, support of different beam-widths may be provided by usage of smaller number(s) of antenna ports (such as N 1, N2) for CSI-RS for periodic / semi-persistent CSI reporting and aperiodic CSI reporting. For instance, the periodic / semi-persistent CSI reporting may be based on a subset of CSI-RS antenna ports for aperiodic CSI reporting.

In some embodiments, support for different beam-widths may be provided by usage of a beam broadening technique. Periodic / semi-persistent CSI reporting may use a broader beam-width than a beam-width used for aperidic CSI reporting. To reduce overhead for periodic / semi-persistent CSI reporting with a broader beam, a small oversampling factor may be used (and/or the oversampling factor may be reduced in comparison to aperiodic CSI reporting).

In some embodiments, CSI reporting based on PMIs of different beam width may be used. More specifically, the CSI reporting associated with periodic / semi-persistent CSI reporting should be associated with PMIs corresponding to wider beam width comparing to PMTs associated with aperiodic CSI reporting where narrow beam width is used for CSI reporting.

In some embodiments, support of different beam width may be provided by using smaller number of antenna ports {N1, N2} for CSI-RS associated with periodic / semi-persistent CSI reporting and aperiodic CSI reporting. The example is illustrated in FIG. 10, in which FD-MIMO antenna 1000 (with antenna elements 1005) is virtualized (as indicated by 1020) to N1=2 (as indicated by 1044), N2=4 (as indicated by 1042), P=2 antenna port layout. According to the invention the CSI-RS for aperiodic CSI reporting is based on all ((N1=2)*(N2=4)*(P=2) = 16) antenna ports transmitted by TRP, while the periodic / semi-persistent CSI reporting is based on the subset ((N1=2)*(N2=1)*(P=2) = 4) of CSI-RS antenna ports.

Referring to FIG. 10, an example of virtualization of FD-MIMO antennas into different antenna port layouts for periodic / semi-persistent and aperiodic CSI reporting is shown. In this case, the beam corresponding to periodic / semi-persistent CSI reporting will have wider beam width comparing to beam corresponding to aperiodic CSI reporting. Moreover the overhead associated with periodic / semi-persistent CSI reporting can be reduced comparing to overhead of aperiodic CSI reporting.

In some embodiments, one or more of the following may be performed: configuration of different N1,N2 for periodic / semi-persistent CSI reporting and aperiodic CSI reporting and possibly 01,02; configuration of different CSI-RS resources with different number of antenna ports; configuration of CSI-RS resource for periodic / semi-persistent CSI reporting with CSI-RS antenna ports which are subset of CSI-RS antenna ports for CSI-RS resource associated with aperiodic CSI reporting; configuration of different codebooks for periodic / semi-persistent CSI reporting and aperiodic CSI according to N1,N2 parameters associated with corresponding CSI-RS resources; configuration of the codebook for periodic / semi-persistent CSI reporting with smaller O1 and/or O2 comparing to aperiodic CSI.

In some embodiments, a device (such as a UE 102, eNB 104 and/or other device) may perform one or more of the following operations. References below to a method are not limiting, as one or more operations described below included in the method may be performed by a device. Accordingly, the device may be configured to perform one or more of the operations.

CSI reporting may be performed using different uplink physical channels. The method may include configuration of two or more uplink physical channels at the UE 102 for CSI reporting. The method may include configuration of two or more non-zero power CSI-RS resources for channel measurements at the UE 102. Each CSI-RS resource may be associated with each physical channel. The method may include configuration of the CSI reporting parameters, including parameters of codebook. Different CSI parameters may be associated with different uplink physical channels. CSI measurements and reporting may be performed at the UE 102 according to CSI-RS and CSI reporting configurations on each uplink physical channel.

In some embodiments, one of the uplink physical channels may be a physical uplink control channel (PUCCH). In some embodiments, one of the uplink physical channels may be a physical uplink shared channel (PUSCH). In some embodiments, CSI-RS configuration may be the number of antenna ports in first and second dimensions. In some embodiments, the CSI-RS configuration may be the beam oversampling factor for the first and second dimension. In some embodiments, CSI-RS antenna ports corresponding to the first uplink physical channel may be a subset of CSI-RS antenna ports of the other physical channel. In some embodiments, the first uplink physical channel may be a PUCCH and the second physical channel may be a PUSCH. In some embodiments, the CSI reporting on the first uplink physical channel may be periodic or quasi-periodic with semi-persistent uplink resource allocation for CSI reporting. In some embodiments, the CSI reporting on the second uplink physical channel may be periodic with aperiodic uplink resource allocation for CSI reporting.

The scope of protection of the invention is defined in the appended claims.

**Claims**

1.  A method comprising:
    at a User Equipment, UE, (400):

    generating an adaptive codebook of codewords based at least partly on a matrix product of:

    a first matrix based at least partly on a sequence of complex exponentials for which an argument is based at least partly on a configurable broadening factor, and
    a second matrix that includes codewords of a base codebook,

    determining channel state information, CSI, for antenna elements of an antenna array of a base station based at least partly on CSI reference signals, CSI-RS, received from the base station;
    determining a plurality of signal quality measurements based at least partly on correlations between the CSI and the codewords of the adaptive codebook; and
    encoding, for transmission, an uplink control message that indicates the codeword of the adaptive codebook for which the signal quality measurement of the plurality of signal quality measurements is largest.

2.  The method of claim 1, wherein the codewords of the base codebook include antenna element scale values to enable directional transmissions by the base station.

3.  The method of claim 1, wherein the codewords of the adaptive codebook include antenna element scale values to enable directional transmissions by the base station.

4.  The method of claim 1, wherein transmission beam-widths of the codewords of the adaptive codebook are less than an average transmission beam-width of the codewords of the base codebook.

5.  The method of claim 1, wherein the CSI-RS is received using a plurality of antenna ports and respective antenna ports of the plurality of antenna ports are mapped to one or more respective resource elements, REs, one or more respective symbol periods, and one or more respective transmit antennas.

6.  An apparatus, comprising a processor configured to cause a user equipment device to perform a method according to any of claims 1-5.

7.  The apparatus of claim 6, further comprising a radio operably coupled to the processor.

8.  A method, comprising:
    at a base station:
    generating an adaptive codebook of codewords based at least partly on a matrix product of:

    a first matrix based at least partly on a sequence of complex exponentials for which an argument is based at least partly on a configurable broadening factor, and
    a second matrix that includes codewords of a base codebook,
    transmitting, to a User Equipment, UE, channel state information, CSI, reference signals, CSI-RS using antenna elements of an antenna array of the base station; and
    receiving, from the UE, an uplink control message that indicates a codeword of the adaptive codebook for which a signal quality measurement of a plurality of signal quality measurements of the UE associated with the CSI-RS is largest.

9.  The method of claim 8, wherein the codewords of the base codebook include antenna element scale values to enable directional transmissions by the base station.

10. The method of claim 8, wherein the codewords of the adaptive codebook include antenna element scale values to enable directional transmissions by the base station.

11. The method of claim 8, wherein transmission beam-widths of the codewords of the adaptive codebook are less than an average transmission beam-width of the codewords of the base codebook.

**12.** The method of claim 8, wherein the respective antenna ports of the antenna array are mapped to one or more respective resource elements, REs, and one or more respective symbol periods.

**13.** The method of claim 8, determining the codewords of the base codebook to correspond to different transmit directions when the antenna elements of the antenna array are scaled by scalar values of different codewords of the base codebook.

**14.** An apparatus, comprising a processor configured to cause a base station to perform a method according to any of claims 8-13.

**15.** The apparatus of claim 14, further comprising a radio operably coupled to the processor.

**Patentansprüche**

**1.** Verfahren, umfassend:
an einem Benutzergerät, UE, (400):
Erzeugen eines adaptiven Codebuchs von Codewörtern zumindest teilweise basierend auf einem Matrixprodukt aus:

einer ersten Matrix, die zumindest teilweise auf einer Sequenz von komplexen Exponentialen basiert, für die ein Argument zumindest teilweise auf einem konfigurierbaren Verbreiterungsfaktor basiert, und
einer zweiten Matrix, die Codewörter eines Basiscodebuchs enthält,
Bestimmen von Kanalzustandsinformationen, CSI, für Antennenelemente eines Antennenarrays einer Basisstation zumindest teilweise basierend auf CSI-Referenzsignalen, CSI-RS, die von der Basisstation empfangen werden;
Bestimmen einer Mehrzahl von Signalqualitätsmessungen zumindest teilweise basierend auf Korrelationen zwischen den CSI und den Codewörtern des adaptiven Codebuchs; und
Codieren, zur Übertragung, einer Uplink-Steuernachricht, die das Codewort des adaptiven Codebuchs angibt, für das die Signalqualitätsmessung der Mehrzahl von Signalqualitätsmessungen am größten ist.

**2.** Verfahren nach Anspruch 1, wobei die Codewörter des Basiscodebuchs Antennenelementskalenwerte enthalten, um Richtungsübertragungen durch die Basisstation zu ermöglichen.

**3.** Verfahren nach Anspruch 1, wobei die Codewörter des adaptiven Codebuchs Antennenelementskalenwerte enthalten, um Richtungsübertragungen durch die Basisstation zu ermöglichen.

**4.** Verfahren nach Anspruch 1, wobei Übertragungsstrahlbreiten der Codewörter des adaptiven Codebuchs kleiner als eine durchschnittliche Übertragungsstrahlbreite der Codewörter des Basiscodebuchs sind.

**5.** Verfahren nach Anspruch 1, wobei die CSI-RS unter Verwendung einer Vielzahl von Antennenanschlüssen empfangen werden und jeweilige Antennenanschlüsse der Vielzahl von Antennenanschlüssen auf ein oder mehrere jeweilige Ressourcenelemente, REs, eine oder mehrere jeweilige Symbolperioden und eine oder mehrere jeweilige Sendeantennen abgebildet werden.

**6.** Vorrichtung, umfassend einen Prozessor, der konfiguriert ist, um eine Benutzergerätevorrichtung zu veranlassen, ein Verfahren nach einem der Ansprüche 1-5 durchzuführen.

**7.** Vorrichtung nach Anspruch 6, ferner umfassend ein Funkgerät, das betriebsfähig mit dem Prozessor gekoppelt ist.

**8.** Verfahren, umfassend:
an einer Basisstation:
Erzeugen eines adaptiven Codebuchs von Codewörtern zumindest teilweise basierend auf einem Matrixprodukt aus:

einer ersten Matrix, die zumindest teilweise auf einer Sequenz von komplexen Exponentialen basiert, für die ein Argument zumindest teilweise auf einem konfigurierbaren Verbreiterungsfaktor basiert, und
einer zweiten Matrix, die Codewörter eines Basiscodebuchs enthält,
Übertragen, an ein Benutzergerät, UE, von Kanalzustandsinformationen, CSI, Referenzsignalen, CSI-RS, unter Verwendung von Antennenelementen eines Antennenarrays der Basisstation; und

Empfangen, von dem UE, einer Uplink-Steuernachricht, die ein Codewort des adaptiven Codebuchs angibt, für das eine Signalqualitätsmessung einer Mehrzahl von Signalqualitätsmessungen des UE, die mit den CSI-RS assoziiert sind, am größten ist.

9. Verfahren nach Anspruch 8, wobei die Codewörter des Basiscodebuchs Antennenelementskalenwerte enthalten, um Richtungsübertragungen durch die Basisstation zu ermöglichen.

10. Verfahren nach Anspruch 8, wobei die Codewörter des adaptiven Codebuchs Antennenelementskalenwerte enthalten, um Richtungsübertragungen durch die Basisstation zu ermöglichen.

11. Verfahren nach Anspruch 8, wobei Übertragungsstrahlbreiten der Codewörter des adaptiven Codebuchs kleiner als eine durchschnittliche Übertragungsstrahlbreite der Codewörter des Basiscodebuchs sind.

12. Verfahren nach Anspruch 8, wobei die jeweiligen Antennenanschlüsse des Antennenarrays auf ein oder mehrere jeweilige Ressourcenelemente, REs, und eine oder mehrere jeweilige Symbolperioden abgebildet werden.

13. Verfahren nach Anspruch 8, Bestimmen, dass die Codewörter des Basiscodebuchs unterschiedlichen Senderichtungen entsprechen, wenn die Antennenelemente des Antennenarrays durch skalare Werte unterschiedlicher Codewörter des Basiscodebuchs skaliert werden.

14. Vorrichtung, umfassend einen Prozessor, der konfiguriert ist, um eine Basisstation zu veranlassen, ein Verfahren nach einem der Ansprüche 8-13 durchzuführen.

15. Vorrichtung nach Anspruch 14, ferner umfassend ein Funkgerät, das betriebsfähig mit dem Prozessor gekoppelt ist.

**Revendications**

1. Un procédé comprenant :
   au niveau d'un équipement utilisateur, UE, (400) :

   la génération d'un livre de code adaptatif de mots de code sur la base, au moins en partie, d'un produit matriciel :

   d'une première matrice basée au moins en partie sur une séquence d'exponentielles complexes pour lesquelles un argument est basé au moins en partie sur un facteur d'élargissement configurable, et
   d'une seconde matrice qui comprend des mots de code d'un livre de code de base,

   la détermination d'une information d'état de canal, CSI, pour des éléments d'antenne d'un réseau d'antennes d'une station de base sur la base, au moins en partie, de signaux de référence de CSI, CSI-RS, reçus à partir de la station de base ;
   la détermination d'une pluralité de mesures de qualité de signal sur la base, au moins en partie, de corrélations entre la CSI et les mots de code du livre de code adaptatif ; et
   le codage, pour transmission, d'un message de contrôle de liaison montante qui indique le mot de code du livre de code adaptatif pour lequel la mesure de qualité de signal de la pluralité de mesures de qualité de signal est la plus grande.

2. Le procédé selon la revendication 1, dans lequel les mots de code du livre de code de base comprennent des valeurs d'échelle d'élément d'antenne pour permettre des transmissions directionnelles par la station de base.

3. Le procédé selon la revendication 1, dans lequel les mots de code du livre de code adaptatif comprennent des valeurs d'échelle d'élément d'antenne pour permettre des transmissions directionnelles par la station de base.

4. Le procédé selon la revendication 1, dans lequel les largeurs de faisceau de transmission des mots de code du livre de code adaptatif sont inférieures à une largeur de faisceau de transmission moyenne des mots de code du livre de code de base.

5. Le procédé selon la revendication 1, dans lequel le CSI-RS est reçu en utilisant une pluralité de ports d'antenne, et les ports d'antenne respectifs de la pluralité de ports d'antenne sont mappés à un ou plusieurs éléments de ressource, RE, respectifs, à une ou plusieurs périodes de symbole respectives et à une ou plusieurs antennes de transmission respectives.

6. Un appareil comprenant un processeur configuré pour amener un dispositif d'équipement utilisateur à réaliser un procédé selon une des revendications 1 à 5.

7. L'appareil selon la revendication 6, comprenant en outre une radio fonctionnellement couplée au processeur.

8. Un procédé comprenant :

au niveau d'une station de base :

la génération d'un livre de code adaptatif de mots de code sur la base, au moins en partie, d'un produit matriciel :

d'une première matrice basée au moins en partie sur une séquence d'exponentielles complexes pour lesquelles un argument est basé au moins en partie sur un facteur d'élargissement configurable, et
d'une seconde matrice qui comprend des mots de code d'un livre de code de base,

la transmission, à un équipement utilisateur, UE, de signaux de référence d'information d'état de canal, CSI, CSI-RS, en utilisant des éléments d'antenne d'un réseau d'antennes de la station de base ; et
la réception, à partir de l'UE, d'un message de contrôle de liaison montante qui indique un mot de code du livre de code adaptatif pour lequel une mesure de qualité de signal d'une pluralité de mesures de qualité de signal de l'UE associées au CSI-RS est la plus grande.

9. Le procédé selon la revendication 8, dans lequel les mots de code du livre de code de base comprennent des valeurs d'échelle d'élément d'antenne pour permettre des transmissions directionnelles par la station de base.

10. Le procédé selon la revendication 8, dans lequel les mots de code du livre de code adaptatif comprennent des valeurs d'échelle d'élément d'antenne pour permettre des transmissions directionnelles par la station de base.

11. Le procédé selon la revendication 8, dans lequel des largeurs de faisceau de transmission des mots de code du livre de code adaptatif sont inférieures à une largeur de faisceau de transmission moyenne des mots de code du livre de code de base.

12. Le procédé selon la revendication 8, dans lequel les ports d'antenne respectifs du réseau d'antennes sont mappés à un ou plusieurs éléments de ressource, RE, respectifs et une ou plusieurs périodes de symbole respectives.

13. Le procédé selon la revendication 8, comprenant la détermination des mots de code du livre de code de base pour qu'ils correspondent à des directions de transmission différentes quand les éléments d'antenne du réseau d'antennes sont normalisés par des valeurs scalaires de différents mots de code du livre de code de base.

14. Un appareil comprenant un processeur configuré pour amener une station de base à réaliser un procédé selon une des revendications 8 à 13.

15. L'appareil selon la revendication 14, comprenant en outre une radio fonctionnellement couplée au processeur.

100

124 EPC

126 — PDN GW — SERVING GATEWAY — MME — 122 — 120

S1-MME LINK

115 — S1

104 | 104 | 104 | 104

LP eNB | MACRO eNB — X2 — MACRO eNB — X2 — LP eNB — 101

E-UTRAN

102 — UE | 102 — UE | UE — 102 | UE — 102

FIG. 1

FIG. 2

FIG. 3

USER EQUIPMENT (UE)

*FIG. 4*

500

| 505 | TRANSMIT ONE OR MORE CSI REFERENCE SIGNALS (CSI-RS) |

| 510 | RECEIVE ONE OR MORE MESSAGES FROM A UE |

| 515 | GENERATE ONE OR MORE ADAPTIVE CODEBOOKS BASED ON A BASE CODEBOOK |

| 520 | DETERMINE A BEAM-WIDTH TO BE USED FOR A DIRECTIONAL TRANSMISSION |

| 525 | SELECT ONE OF THE ADAPTIVE CODEBOOKS |

| 530 | SELECT A CODEWORD FROM THE SELECTED ADAPTIVE CODEBOOK |

| 535 | GENERATE A SIGNAL FOR TRANSMISSION |

| 540 | SCALE THE SIGNAL |

| 545 | TRANSMIT THE SIGNAL |

*FIG. 5*

FIG. 6

700

| 705 — | EXCHANGE ONE OR MORE CONTROL MESSAGES WITH A UE TO ESTABLISH PERIODIC CSI REPORTING |

| 710 — | DETERMINE FIRST CODEWORD(S) FOR THE PERIODIC CSI REPORTS |

| 715 — | TRANSMIT ONE OR MORE MESSAGES THAT INDICATES THE FIRST CODEWORD(S) |

| 720 — | TRANSMIT ONE OR MORE CSI REFERENCE SIGNALS (CSI-RS) IN ACCORDANCE WITH PERIODIC TRANSMISSION |

| 725 — | RECEIVE ONE OR MORE PERIODIC CSI REPORTS FROM A UE |

| 730 — | DETERMINE SECOND CODEWORD(S) FOR AN APERIODIC CSI REPORT |

| 735 — | TRANSMIT A DCI TO THE UE TO REQUEST AN APERIODIC CSI REPORT FOR THE SECOND CODEWORD(S) |

| 740 — | TRANSMIT ONE OR MORE CSI REFERENCE SIGNALS (CSI-RS) FOR THE APERIODIC CSI REPORT |

| 745 — | RECEIVE THE APERIODIC CSI REPORT FROM THE UE |

*FIG. 7*

FIG. 8

FIG. 9

FIG. 10

**EP 3 455 950 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015133690 A1
- US 2015381247 A1